# EUROPEAN PATENT APPLICATION

(11) **EP 3 766 393 A1**
(43) Date of publication of application: **20.01.2021**
(21) Application number: 18910155.3
(22) Date of filing: 28.05.2018
(51) Int. Cl.: A47J 31/42, A47J 31/44

(54) **BEAN GRINDING COFFEE MAKER**

(30) Priority: 15.03.2018 CN 201810214636
(71) Applicant: Vesta Electrical Appliance Manufacturing (Zhongshan) Co., Ltd., Guangdong 528458 (CN)
(72) Inventor: ZHAO, Guozhi, Zhongshan, Guangdong 528458 (CN); CHEN, Xiaolin, Zhongshan, Guangdong 528458 (CN)
(74) Representative: K & H Bonapat Patentanwälte Koch · von Behren & Partner mbB
(86) International application number: PCT/CN2018/088721
(87) International publication number: WO 2019/174126

(57) **Abstract**

The present application provides a bean grinding coffee maker to solve a sealing problem of a power outlet passage at a bottom of a coffee bean grinding device. The bottom of the coffee bean grinding device is provided with the power outlet passage. A brewing device is disposed under the power outlet passage and in communication with the coffee bean grinding device through the power outlet passage. A sealing component is disposed at an end opening of the power outlet passage to seal the end opening of the power outlet passage. A blocking plate is disposed between the sealing component and the brewing device, and is staggered with or presses against a bottom of the sealing component by means of moving to control the powder outlet passage to be communicated with or isolated from the brewing device, thus achieving a seal of the powder outlet opening, and overcoming a powder blockage defect caused by an introduce of steam into the bean grinding chamber due to poor sealing performance of the powder outlet opening of the bean grinding coffee maker in the prior art. An effective sealing of the powder outlet opening is achieved, and moreover, the characteristics of simple and reasonable structure, automation, high sealing performance, simple operation, low cost, and so on are obtained.

## Description

### CROSS-REFERENCE TO RELATED APPLICATIONS

This application claims priority benefit from China Patent Application No. 201810214636.4, filed on March 15, 2018, entitled "BEAN GRINDING COFFEE MAKER", the entirety of which is incorporated by reference herein.

### TECHNICAL FIELD

The present application relates to the field of electrical product for making coffee beverage, in particular to a bean grinding coffee maker.

### BACKGROUND

A commercially available coffee maker provided with a bean grinding device has poor sealing performance at a powder outlet opening thereof, causing an introduce of steam into a chamber of the bean grinding device in cooking coffee and thus making the coffee powder to be damped. The damp coffee powder tends to be cohered together to form a block, resulting in a blockage of the coffee powder.

In order to address the sealing problem of the powder outlet opening, the current bean grinding coffee maker generally adopts a mechanism including a relatively large number of components and having a relatively complicated structure, thus having a high cost.

### SUMMARY

In view of the above, there is a need to provide a bean grinding coffee maker to address the powder blockage problem caused by the introduce of the steam into the chamber of the bean grinding device due to the poor sealing performance of the powder outlet opening of the bean grinding coffee maker in the prior art.

A bean grinding coffee maker, includes:
a machine body;
a coffee bean grinding device disposed in the machine body, a powder outlet passage being disposed at a bottom of the coffee bean grinding device;
a brewing device disposed under the powder outlet passage and being in communication with the coffee bean grinding device through the powder outlet passage;
a sealing component disposed at an end opening of the powder outlet passage;
a blocking plate disposed between the sealing component and the brewing device, the blocking plate being staggered with or pressing against a bottom of the sealing component by means of moving to control the powder outlet passage to be communicated with or isolated from the brewing device.

In an embodiment, the bean grinding coffee maker further includes a driving motor. A rotating shaft of the driving motor is connected to the blocking plate to drive the blocking plate to rotate to be staggered with or press against the bottom of the sealing component.

In an embodiment, the sealing component includes a sealing ring and a first sealing ring support; the first sealing ring support is arranged at an upper body of the machine body; and the sealing ring is fixed at the end opening of the powder outlet passage by the first sealing ring support.

In an embodiment, the sealing ring includes an inner ring, an outer ring, and a sealing portion connecting the inner ring and the outer ring. The first sealing ring support is tightly sleeved between the inner ring and the outer ring. The inner ring is tightly clamped between an outer wall of the powder outlet passage and an inner wall of the first sealing ring support. The outer ring is tightly clamped between the upper body of the machine body and an outer wall of the first sealing ring support. The blocking plate presses against the sealing portion to seal and close the powder outlet passage.

In an embodiment, the sealing portion is in a shape of a downward-convex curved surface.

In an embodiment, the sealing portion is in a shape of an arched spherical surface.

In an embodiment, the sealing component further includes a second sealing ring support sleeved on an inner side wall of the inner ring and tightly abutting against the outer wall of the powder outlet passage.

In an embodiment, a protruding step is provided on the inner side wall of the inner ring and adjacent to the sealing portion. A bottom of the second sealing ring support abuts against the protruding step.

In an embodiment, the bean grinding coffee maker further includes a motor support and a microswitch. The motor support is arranged on an upper body of the machine body. The driving motor is fixed on the motor support. The microswitch is arranged on the motor support to control the motor to rotate.

In an embodiment, the brewing device further includes a coffee basket for containing coffee powder. The coffee basket is located under or beside the power outlet opening.

In the above-described bean grinding coffee maker, the sealing component is provided at the end opening of the powder outlet passage; the blocking plate is provided between the sealing component and the brewing device; and the blocking plate is staggered with or presses against the bottom of the sealing component by means of moving, so as to control the powder outlet passage to be communicated with or isolated from the brewing device, thereby achieving the excellent seal of the powder outlet opening, and overcoming the powder blockage defect caused by the steam introduced into the bean grinding chamber due to the poor sealing performance of the powder outlet opening of the bean grinding coffee maker in the prior art. The effective sealing of the powder outlet opening is achieved, and moreover, the characteristics of simple and reasonable structure, automation, high sealing performance, simple operation, low cost, and so on are obtained.

### BRIEF DESCRIPTION OF THE DRAWINGS

In order to clearly illustrate technical solutions of embodiments of the present application, the following drawings, which are to be referred in the description of the embodiments, will be briefly described below. Obviously, the drawings in the following description are only some embodiments of the present application, and those skilled in the art can obtain other drawings according to the following drawings without any creative work.
FIG. 1 is a longitudinal sectional view of a whole bean grinding coffee maker according to an embodiment of the present invention;
FIG. 2 is a partial enlarged view of a longitudinal sectional view of a sealing component of the bean grinding coffee maker according to an embodiment of the present utility model;
FIG. 3 is a top view illustrating structure of the sealing component of the bean grinding coffee maker according to an embodiment of the present utility model;
FIG. 4 is a schematic exploded view of the sealing component of the bean grinding coffee maker according to an embodiment of the present utility model;
FIG. 5 is a longitudinal sectional view of a sealing ring of the sealing component of the bean grinding coffee maker according to an embodiment of the present utility model.

Indication of reference numeral:
machine body 10;
coffee bean grinding device 100, powder outlet passage 110;
brewing device 200;
sealing component 300, first sealing ring support 310, second sealing ring support 320, sealing ring 300, inner ring 331, outer ring 332, sealing portion 333, protruding step 334;
blocking plate 400;
driving motor 500, motor support 510, microswitch 520.

### DETAILED DESCRIPTION

For a clear understanding of the objectives, technical solutions, and advantages of the present application, the present application will be described in detail with reference to the embodiments and the accompanying drawings. It should be understood that the descried specific embodiments herein are merely used for illustrating the present application, but not intended to limit the scope of the present application.

It should be understood that when an element is referred to as "fixed" to another element, it can be directly disposed on the other element, or there may be an intermediate element therebetween. When an element is referred to as "connected" to another element, it can be directly connected to the other element, or meanwhile there may be an intermediate element. In contrast, when an element is referred to as "directly on" another element, there are no intermediate elements. When an element is referred to as "directly connected" to another element, there are no intermediate elements. The terms "vertical", "horizontal", "left" and "right" and other similar expressions herein are merely used for the purpose of illustration.

It should be understood that in the description of the present application, terms such as "length," "width," "thickness," "upper," "lower," "front," "rear," "left," "right," "top," "bottom," "inner," "outer," should be construed to refer to the orientations or the location relationship as described or as shown in the drawings. These terms are just used for convenience of description rather than to indicate or imply that the referred device or component must be arranged in such specific directions or to be operated or configured in specific directions. Therefore, the above mentioned terms shall not be interpreted as a limitation to the present application.

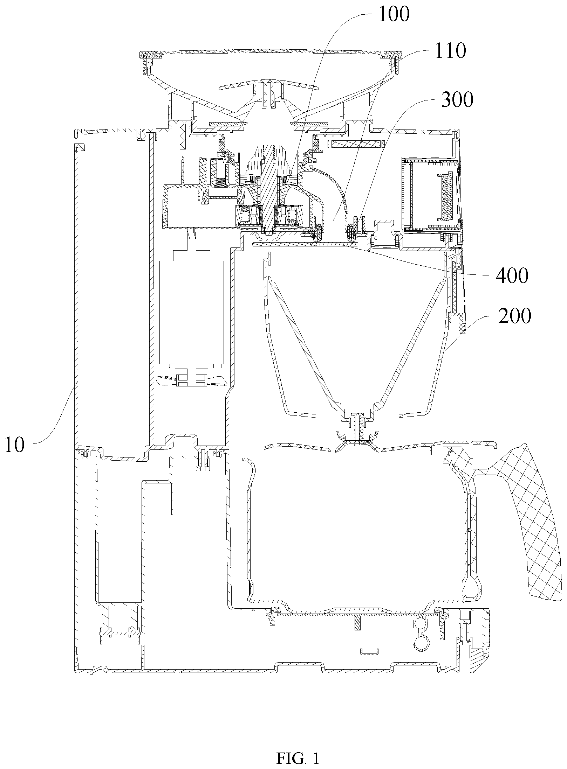

Referring to FIG. 1, the present application provides a bean grinding coffee maker, which includes a machine body 10, a coffee bean grinding device 100, a brewing device 200, a sealing component 300, and a blocking plate 400. The coffee bean grinding device 100 is disposed in the machine body. A powder outlet passage 110 is disposed at a bottom of the coffee bean grinding device 100. The brewing device 200 is disposed under the powder outlet passage 110. The brewing device 200 is communication with the coffee bean grinding device 100 through the powder outlet passage 110. The sealing component 300 is disposed at an end opening of the powder outlet passage 110 to seal the end opening of the powder outlet passage 110. The blocking plate 400 is disposed between the sealing component 300 and the brewing device 200. The blocking plate 400 is staggered with or presses against a bottom of the sealing component 300 by means of moving, so as to control the powder outlet passage 110 to be communicated with or isolated from the brewing device 200.

Specifically, the machine body 10 includes an upper body and a lower body. The coffee bean grinding device 100 is arranged in the upper body 10 to grind the coffee bean. The powder outlet passage 110 is disposed at the bottom of the coffee bean grinding device 100. After the coffee beans are ground into granules or powder, the granules or the powder enter the brewing device 200 disposed under the powder outlet passage 110 through the powder outlet passage 110 to be soaked.

Specifically, the brewing device 200 includes a coffee basket located under or beside the power outlet opening. The coffee basket is configured to contain the coffee powder discharged from the powder outlet passage 110. The coffee powder is soaked in the coffee basket.

Specifically, the blocking plate 400 is disposed between the sealing component 300 and the brewing device 200. The blocking plate 400 has two operating positions. In a first operating position, the blocking plate 400 is staggered with the bottom of the sealing component 300; the coffee bean grinding device 100 is in communication with the brewing device 200 through the powder outlet passage 110; and the coffee power in the coffee bean grinding device 100 enters the brewing device 200, specifically, the coffee basket. In a second operating position, the blocking plate 400 presses against the bottom of the sealing component 300; the end opening of the powder outlet passage 110 is blocked and closed; and the coffee bean grinding device 100 is sealed and isolated from the brewing device 200. The steam in the brewing device 200 is blocked by the blocking plate 400 and cannot enter the coffee bean grinding device 100, overcoming the powder blockage defect caused by the steam introduced into the bean grinding chamber due to the poor sealing performance of the powder outlet opening. Therefore, the effective sealing of the powder outlet opening is achieved, and moreover, the characteristics of simple and reasonable structure, automation, high sealing performance, simple operation, low cost, and so on are obtained.

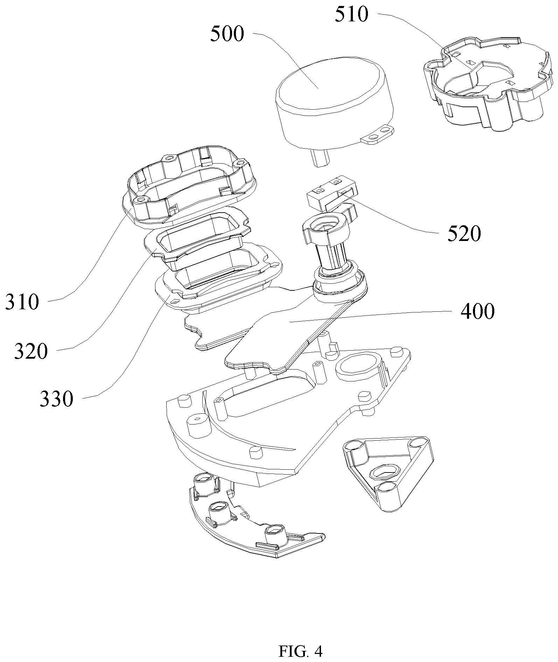

Furthermore, referring to FIG. 4, the bean grinding coffee maker further includes a driving motor 500. A rotating shaft of the driving motor 500 is connected to the blocking plate 400. The rotating shaft of the driving motor 500 drives the blocking plate 400 to rotate to be staggered with or press against the bottom of the sealing component 300.

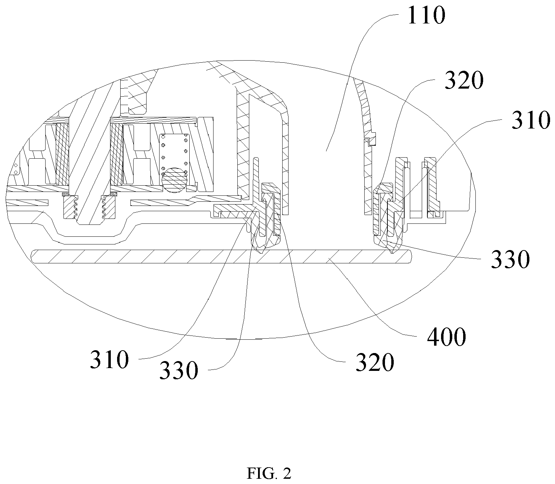

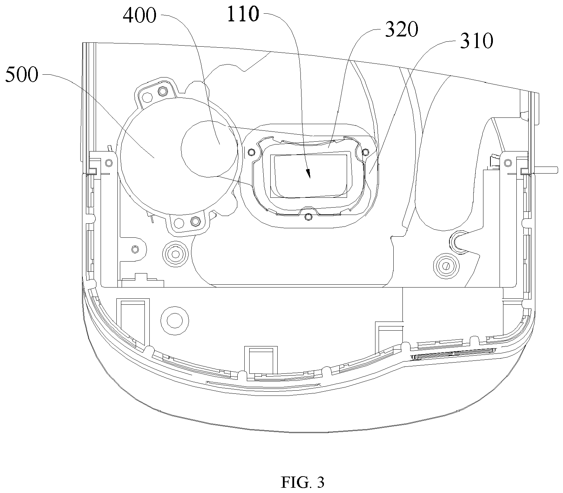

Referring to FIGS. 2 to 4, in an embodiment of the present application, the sealing component 300 includes a sealing ring 330 and a first sealing ring support 310. The first sealing ring support 310 is disposed on the upper body of the machine body 10 and fixes the sealing ring 330 at the end opening of the powder outlet passage 110. Specifically, when the sealing ring 330 is fixed at the end opening of the powder outlet passage 110 by the first sealing ring support 310, an inner side wall of the sealing ring 330 tightly abuts against an outer side wall of the powder outlet passage 110, which is located at the end opening of the powder outlet passage 110.

Optionally, the sealing ring 330 is a rubber material sealing ring.

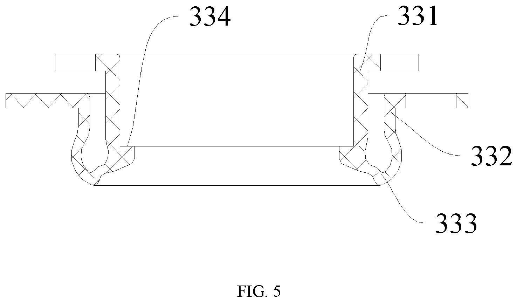

Referring to FIG. 5, optionally, the sealing ring 330 includes an inner ring 331, an outer ring 332, and a sealing portion 333 connecting the inner ring 331 and the outer ring 332. The first sealing ring support 310 is tightly sleeved between the inner ring 331 and the outer ring 332. The inner ring 331 is tightly clamped between the outer wall of the powder outlet passage 110, which is located at the end opening of the powder outlet passage 110, and an inner wall of the first sealing ring support 310. The outer ring 332 is tightly clamped between the upper body of the machine body and an outer wall of the first sealing ring support 310. The blocking plate 400 presses against the sealing portion 333 to seal and close the powder outlet passage 110.

Specifically, referring to FIG. 5, the whole sealing ring 330 is substantially U-shaped. The first sealing ring support 310 is tightly sleeved between the inner ring 331 and the outer ring 332. Atop of the outer ring 332 extends outwards and toward a side away from the inner ring 331 to form a flanged edge of the outer ring 332. The outer ring 332 is arranged on the upper body of the machine body 10 via the flanged edge of the outer ring 332. A portion of the first sealing ring support 310 presses against the flanged edge of the outer ring 332 to fix the sealing ring 330 on the upper body of the machine body 10. Atop of the inner ring 331 extends outwards and toward a side adjacent to the outer ring 332 to form a flanged edge of the inner ring 331. The flanged edge of the inner ring 331 tightly abuts against a platform of the first sealing ring support 310 while the inner ring 331 is tightly clamped between the outer wall of the powder outlet passage 110, which is located at the end opening of the powder outlet passage 110, and the first sealing ring support 310.

Optionally, the sealing portion 333 is in a shape of a downward-convex curved surface, which can reduce a resistance to the rotation of the blocking plate 400 when the powder outlet passage 110 is to be blocked and sealed, and can further increase the compressed amount of the sealing ring 300 to from a tightly pressed face-to-face contact between the sealing ring 300 and the blocking plate 400, thereby achieving a good seal of the powder outlet opening.

Specifically, referring to FIGS. 2 and 5, the sealing portion 333 is in a shape of an arched spherical surface. After the first sealing ring support 310 is tightly sleeved between the inner ring 331 and the outer ring 332, the bottom of the first sealing ring support 310 will not touch the sealing portion 333, and a sealed chamber is formed at the bottom of the sealing ring 330. As such, when the blocking plate 400 presses against the sealing portion 333 to seal and close the powder outlet passage 110, the sealing portion 333 is compressed by the blocking plate 400 and deforms toward the inside of the sealed chamber, and the air in the sealed chamber is compressed. When the blocking plate 400 presses against the sealing portion 333 to block the end opening of the powder outlet passage, an inner side wall of the sealing portion 333 in the shape of the arched spherical surface is pressed by the compressed air, and an outer side wall of the sealing portion 333 in the shape of the arched spherical surface is tightly pressed by the blocking plate 400, so as to form the tightly pressed face-to-face contact between the sealing ring 300 and the blocking plate 400, which increases the sealing performance of the powder outlet opening. Moreover, a tip protruding downward is provided at a lowest location of the sealing portion 333 in the shape of the arched spherical surface, which can reduce the resistance to the rotation of the blocking plate 400 when the powder outlet passage 110 is sealed. When the driving motor 500 drives the blocking plate 400 to be staggered with the powder outlet passage 110, the compressed air in the sealed chamber allows the sealing portion 333 in the shape of the arched spherical surface to be restored to its original shape.

Referring to FIGS. 2 to 5, in an embodiment, the sealing component 300 further includes a second sealing ring support 320. The second sealing ring support 320 is sleeved on the inner side wall of the inner ring 331 and tightly abuts against the outer wall of the powder outlet passage 110, which is located at the end opening of the powder outlet passage 110. Specifically, the sealing ring 330 is firstly sleeved on the first sealing ring support 310, and then the second sealing ring support 320 is sleeved on the inner side wall of the inner ring 331. After the flanged edge of the outer ring 332 is tightly pressed by the first sealing ring support 310, the sealing ring 330 is fixed on the upper body. After being sleeved on the inner side wall of the inner ring 331, the second sealing ring support 320 tightly abuts against the outer side wall of the powder outlet passage 110, and the inner ring 331 is clamped between the first sealing ring support 310 and the second sealing ring support 320. An outward flanged edge is further provided at a top of the second sealing ring support 320. The flanged edge of the second sealing ring support 320 tightly abuts against the flanged edge of the inner ring 331.

Referring to FIG. 5, in an embodiment, a protruding step 334 is provided on the inner side wall of the inner ring 331 and is adjacent to the sealing portion 333. A bottom of the second sealing ring support 310 abuts against the protruding step 334. As such, when the blocking plate 400 presses against the sealing portion 333 to seal and close the powder outlet passage 110, the sealing portion 333 is compressed by the blocking plate 400 and deforms toward the inside of the sealed chamber, and the air in the sealed chamber is compressed. When the blocking plate 400 presses against the sealing portion 333, the protruding step 334 can prevent the arched spherical surface of the sealing ring 330 from partially inclining toward the centre of the sealing ring 330, guaranteeing that the sealing portion 333 only deforms upward or downward, i.e., the sealing portion 333 can only be pressed to deform toward the sealed chamber or be restored to its original shape. The inner side wall of the sealing portion 333 in the shape of the arched spherical surface is pressed by the compressed air, and the outer side wall of the sealing portion 333 in the shape of the arched spherical surface is tightly pressed by the blocking plate 400, so as to form the tightly pressed face-to-face contact between the sealing ring 300 and the blocking plate 400, thereby increasing the sealing performance of the powder outlet opening. Moreover, the tip protruding downward is provided at the lowest location of the sealing portion 333 in the shape of the arched spherical surface, which can reduce the resistance to the rotation of the blocking plate 400 when the powder outlet passage 110 is sealed. When the driving motor 500 drives the blocking plate 400 to be staggered with the powder outlet passage 110, the compressed air in the sealed chamber allows the sealing portion 333 in the shape of the arched spherical surface to be restored to its original shape.

Referring to FIG. 4, in an embodiment, the bean grinding coffee maker further includes a motor support 510 and a microswitch 520. The motor support 510 is arranged on the upper body of the machine body 10. The driving motor 500 is attached to the motor support 510. The microswitch 520 is mounted on the motor support 510 to control the motor rotation.

In an embodiment, the brewing device 200 further includes a coffee basket for containing the coffee powder. The coffee basket is located under or beside the power outlet opening. The coffee basket is configured to contain the coffee powder discharged from the powder outlet passage 110. The coffee powder is soaked in the coffee basket.

The operating principle of the bean grinding coffee maker is as follows.

The microswitch 520 controls the driving motor 500 to rotate, and the driving motor 500 drives the blocking plate 400 to make a translational movement. When the blocking plate 400 is staggered with the end opening of the powder outlet passage 110, the coffee bean grinding device 100 is in communication with the brewing device 200 through the powder outlet passage 110, and the coffee powder in the coffee bean grinding device 100 enters the brewing device 200, specifically, the coffee basket. When the blocking plate 400 presses against the sealing portion 333 of the sealing component 300, the end opening of the powder outlet passage 110 is blocked and closed, and the coffee bean grinding device 100 is sealed and isolated from the brewing device 200.

In the above-described bean grinding coffee maker, the sealing component 300 is provided at the end opening of the powder outlet passage 110; the blocking plate 400 is provided between the sealing component 300 and the brewing device 200; the blocking plate 400 is staggered with or presses against the bottom of the sealing component 300 by means of moving, so as to control the powder outlet passage 110 to be communicated with or isolated from the brewing device 200, thereby achieving the excellent seal of the powder outlet opening, and overcoming the powder blockage defect caused by the steam introduced into the bean grinding chamber due to the poor sealing performance of the powder outlet opening of the bean grinding coffee maker in the prior art. The effective sealing of the powder outlet opening is achieved, and moreover, the characteristics of simple and reasonable structure, automation, high sealing performance, simple operation, low cost, and so on are obtained.

The technical features of the above-described embodiments may be arbitrarily combined. In order to make the description simple, not all possible combinations of the technical features in the above embodiments are described. However, as long as there is no contradiction in the combination of these technical features, the combinations should be in the scope of the present application.

What described above are only several implementations of the present application, and these embodiments are specific and detailed, but not intended to limit the scope of the present application. It should be understood by the skilled in the art that various modifications and improvements can be made without departing from the conception of the present application, and all these modifications and improvements fall within the protection scope of the present application. Therefore, the patent protection scope of the present application is defined by the appended claims.

## Claims

1. A bean grinding coffee maker, **characterized by** comprising:
a machine body;
a coffee bean grinding device disposed in the machine body, a powder outlet passage being disposed at a bottom of the coffee bean grinding device;
a brewing device disposed under the powder outlet passage and being in communication with the coffee bean grinding device through the powder outlet passage;
a sealing component disposed at an end opening of the powder outlet passage;
a blocking plate disposed between the sealing component and the brewing device, the blocking plate being staggered with or pressing against a bottom of the sealing component by means of moving to control the powder outlet passage to be communicated with or isolated from the brewing device.

2. The bean grinding coffee maker of claim 1, **characterized by** further comprising a driving motor, wherein a rotating shaft of the driving motor is connected to the blocking plate to drive the blocking plate to rotate to be staggered with or press against the bottom of the sealing component.

3. The bean grinding coffee maker of claim 2, **characterized in that** the sealing component comprises a sealing ring and a first sealing ring support; the first sealing ring support is arranged at an upper body of the machine body; and the sealing ring is fixed at the end opening of the powder outlet passage by the first sealing ring support.

4. The bean grinding coffee maker of claim 3, **characterized in that** the sealing ring comprises an inner ring, an outer ring, and a sealing portion connecting the inner ring and the outer ring; the first sealing ring support is tightly sleeved between the inner ring and the outer ring; the inner ring is tightly clamped between an outer wall of the powder outlet passage and an inner wall of the first sealing ring support; the outer ring is tightly clamped between the upper body of the machine body and an outer wall of the first sealing ring support; and the blocking plate presses against the sealing portion to seal and close the powder outlet passage.

5. The bean grinding coffee maker of claim 4, **characterized in that** the sealing portion is in a shape of a downward-convex curved surface.

6. The bean grinding coffee maker of claim 5, **characterized in that** the sealing portion is in a shape of an arched spherical surface.

7. The bean grinding coffee maker of any one of claims 3 to 6, **characterized in that** the sealing component further comprises a second sealing ring support sleeved on an inner side wall of the inner ring and tightly abutting against the outer wall of the powder outlet passage.

8. The bean grinding coffee maker of claim 7, **characterized in that** a protruding step is provided on the inner side wall of the inner ring and adjacent to the sealing portion, and a bottom of the second sealing ring support abuts against the protruding step.

9. The bean grinding coffee maker of claim 2, **characterized by** further comprising a motor support and a microswitch, wherein the motor support is arranged on an upper body of the machine body; the driving motor is fixed on the motor support; and the microswitch is arranged on the motor support to control the motor to rotate.

10. The bean grinding coffee maker of claim 1, **characterized in that** the brewing device further comprises a coffee basket for containing coffee powder, wherein the coffee basket is located under or beside the power outlet opening.
